# EUROPEAN PATENT APPLICATION

(11) **EP 4 749 733 A1**
(43) Date of publication of application: **27.05.2026**
(21) Application number: 24926170.2
(22) Date of filing: 27.12.2024
(51) Int. Cl.: H01M 10/04, H01M 50/60

(54) **PRESSING APPARATUS AND PRESSING METHOD**

(30) Priority: 19.02.2024 KR 20240023399
(71) Applicant: LG Energy Solution, Ltd., Seoul 07335 (KR)
(72) Inventor: PARK, Hyeon Uk, Daejeon 34122 (KR)
(74) Representative: Goddar, Heinz J.
(86) International application number: PCT/KR2024/021225
(87) International publication number: WO 2025/178224

(57) **Abstract**

A pressurizing device according to an embodiment of the present disclosure is provided to pressurize a secondary battery cell including an electrode assembly and an exterior material surrounding the electrode assembly, and the pressurizing device may include a pressure roller that rolls on a portion of the exterior material overlapping the electrode assembly and pressurizes the electrode assembly; and pressure plates that extend in one direction along edges of the electrode assembly to pressurize portions of the exterior material overlapping edge portions of the electrode assembly.

## Description

### TECHNICAL FIELD

### CROSS-REFERENCE TO RELATED APPLICATIONS

The present application claims priority to Korean Patent Application No. 10-2024-0023399 filed on February 19, 2024 in the Republic of Korea, the disclosures of which are incorporated herein by reference.

### TECHNICAL FIELD

The present disclosure relates to a pressurizing device and a pressurizing method for pressurizing a secondary battery.

### BACKGROUND ART

A secondary battery (rechargeable battery) is a battery that can be charged and discharged, unlike a primary battery that cannot be recharged. A low-capacity secondary battery is used in small portable electronic devices such as mobile phones, laptop computers and camcorders, while a high-capacity secondary battery is widely used as a power source for driving motors in hybrid vehicles or the like and power storage batteries.

Such a secondary battery includes an electrode assembly composed of a positive electrode, a negative electrode, and a separator, and a case accommodating the same, and may be classified into cylindrical, prismatic, and pouch types depending on its shape. Among these, the pouch-type secondary battery may be formed of a laminate sheet, which is widely used as an exterior of a lithium-ion secondary battery due to its easy adjustment of the exterior to various shapes and light weight.

In the process of forming a pouch-type secondary battery, a process of putting an electrode assembly in a pouch sheet and impregnating it with an electrolyte is performed. In the conventional case, an electrolyte is generally injected into the sheet, and then an impregnation process using a vacuum is performed in a chamber, followed by being sealed. In this case, some air layers remain inside the electrode assembly, which may cause a problem of deteriorating the electrolyte impregnation property of the corresponding part. Therefore, there is a need for a device capable of removing the air remaining in the electrode assembly and improving the electrolyte impregnation property.

The above-described background technology is possessed or acquired by the inventor in the process of deriving the disclosure content of the present application, and cannot necessarily be said to be a known technology disclosed to the general public prior to the filing of this application.

### SUMMARY

### TECHNICAL PROBLEM

The present disclosure is designed to solve the problems of the related art, and therefore the present disclosure is directed to providing a pressurizing device and a pressurizing method capable of removing residual air and improving the impregnation property of an electrolyte by pressurizing an electrode assembly.

### TECHNICAL SOLUTION

A pressurizing device according to an embodiment of the present disclosure is provided to pressurize a secondary battery cell including an electrode assembly and an exterior material surrounding the electrode assembly, and the pressurizing device may include a pressure roller that rolls on a portion of the exterior material overlapping the electrode assembly and pressurizes the electrode assembly; and pressure plates that extend in one direction along edges of the electrode assembly to pressurize portions of the exterior material overlapping edge portions of the electrode assembly.

The pressure roller may be coupled to the pressure plates, and the pressure plates may guide movement of the pressure roller.

A pair of the pressure plates may be disposed to be spaced apart parallel to each other.

The pressure roller may include a roller body rolling against the exterior material and provided to pressurize the electrode assembly; and coupling portions extending from the roller body to be coupled to and supported by the pressure plates.

A coupling hole may be formed in the pressure plate so that the coupling portion of the pressure roller is coupled.

The pressure plate may include first plates extending along the length direction of the electrode assembly to pressurize both ends of the electrode assembly in the width direction.

A pair of the first plates may be disposed to be spaced apart parallel to each other in the width direction of the electrode assembly, and the pressure roller may include a first roller extending in the width direction of the electrode assembly between the pair of first plates.

The pressure plate may include second plates extending along the width direction of the electrode assembly to pressurize both ends of the electrode assembly in the length direction.

A pair of the second plates may be disposed to be spaced apart parallel to each other in the length direction of the electrode assembly, and the pressure roller may include a second roller extending in the length direction of the electrode assembly between the pair of second plates.

The length of the pressure plates may be formed longer than the length of edges of the electrode assembly on which the pressure plates are disposed.

The pressure roller may roll in a direction toward an exterior material opening formed on one side of the exterior material.

The pressure plate may include the first plates extending along the length direction of the electrode assembly to pressurize both ends of the electrode assembly in the width direction; and the second plates extending along the width direction of the electrode assembly to pressurize both ends of the electrode assembly in the length direction, and the pressure roller may include the first roller extending in the width direction of the electrode assembly between the pair of first plates; and the second roller extending in the length direction of the electrode assembly between the pair of second plates, wherein the first roller and the second roller may be configured to sequentially pressurize the electrode assembly according to a preset order.

A pressurizing method according to an embodiment of the present disclosure may include a preparation step of preparing a secondary battery cell in which an exterior material opening is formed in an exterior material where an electrode assembly is accommodated; an injection step of injecting an electrolyte through the exterior material opening so that the electrode assembly is impregnated; a first plate pressurizing step in which the first plate pressurizes a portion of the exterior material overlapping one of an edge of the electrode assembly in the length direction or an edge of the electrode assembly in the width direction; and a first roller pressurizing step in which a first roller extending perpendicular to the first plate rolls on a portion of the exterior material overlapping the electrode assembly and pressurizes the electrode assembly.

The pressurizing method may further include a second plate pressurizing step in which the second plate pressurizes a portion of the exterior material overlapping the other of an edge of the electrode assembly in the length direction or an edge of the electrode assembly in the width direction; and a second roller pressurizing step in which a second roller extending perpendicular to the second plate rolls on a portion of the exterior material overlapping the electrode assembly and pressurizes the electrode assembly.

The first plate pressurizing step and the first roller pressurizing step may be performed before and/or after the injection step.

### ADVANTAGEOUS EFFECTS

The pressurizing device and pressurizing method according to the present disclosure may remove residual air and improve the impregnation property of the electrolyte by pressurizing the electrode assembly.

In addition, effects that may be easily predicted by those skilled in the art from configurations according to embodiments of the present disclosure may be included.

### BRIEF DESCRIPTION OF THE DRAWINGS

FIG. 1 is a schematic structural diagram showing a pressurizing device according to Embodiment 1 of the present disclosure.
FIG. 2 is a view showing a coupling form of a pressure roller and a pressure plate of the pressurizing device of FIG. 1.
FIG. 3 is a perspective view schematically showing the form of a pressure plate of the pressurizing device of FIG. 1.
FIG. 4 is a schematic structural diagram showing a pressurizing device according to Embodiment 2 of the present disclosure.
FIG. 5 is a view showing a coupling form of a pressure roller and a pressure plate of the pressurizing device of FIG. 4.
FIG. 6 is a flow chart showing a pressurizing method according to the present disclosure in which an injection step is performed before a pressurizing step.
FIG. 7 is a flow chart showing a pressurizing method according to the present disclosure in which an injection step is performed after a pressurizing step.

### DETAILED DESCRIPTION

Hereinafter, preferred embodiments of the present disclosure will be described in detail with reference to the accompanying drawings to enable those having ordinary skill in the technical field to which the present disclosure appertains to easily carry out the present disclosure. The following description is one of several aspects of the embodiments, and in describing one embodiment, a specific description of a known function or configuration will be omitted to clarify the gist of the present disclosure.

In this specification, in affixing the reference numerals to the elements in each drawing, the identical or similar reference numerals are affixed to the identical or similar elements throughout the specification. Components included in any one embodiment and components including common functions will be described using the same names in other embodiments. It should be understood that the terms or words used in this specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Additionally, the present disclosure is not limited to the embodiments described above, and various modifications and variations may be made from these descriptions by those having ordinary skill in the field to which the present disclosure appertains. Therefore, the idea of the present disclosure should not be limited to the embodiments described above, and all equivalents or equivalent variations of the claims as well as the claims to be described later will be said to fall within the scope of the idea of the present disclosure.

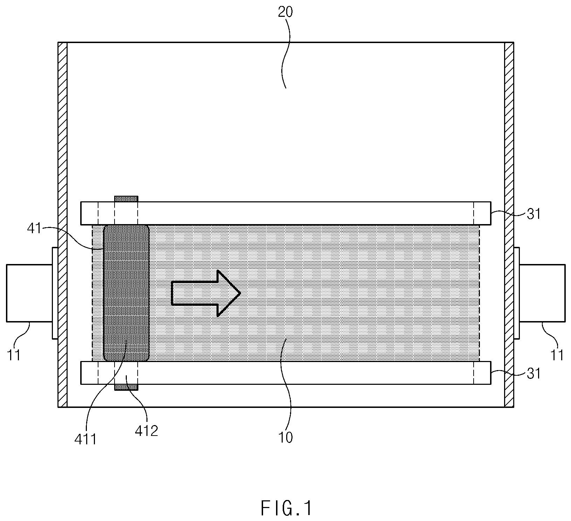

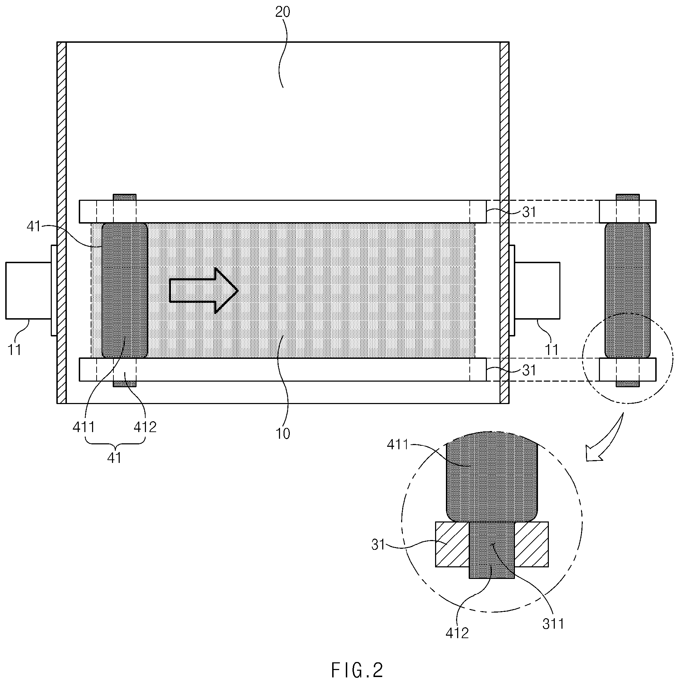

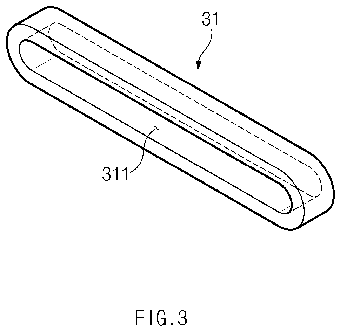

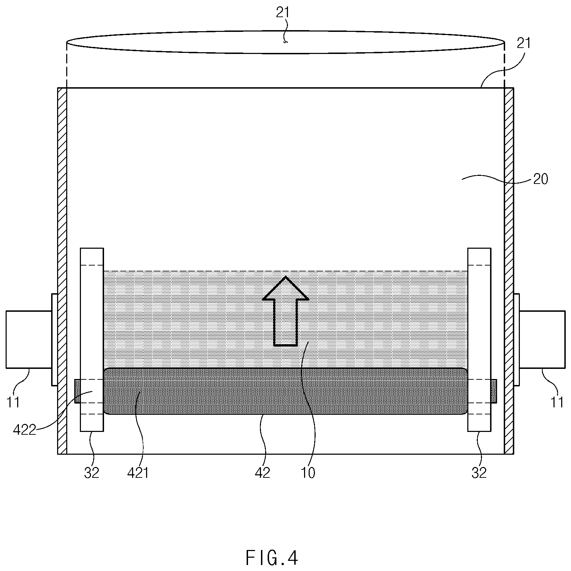

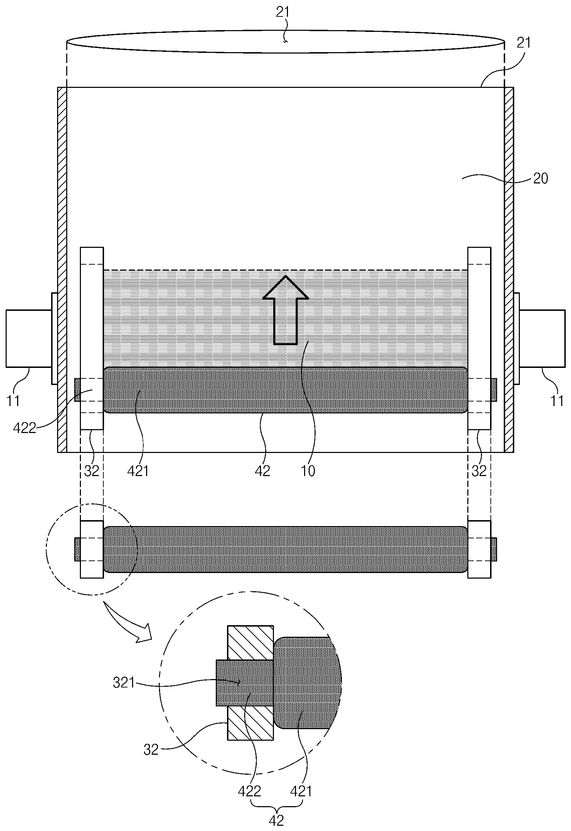

FIG. 1 is a schematic structural diagram showing a pressurizing device according to Embodiment 1 of the present disclosure. FIG. 2 is a view showing a coupling form of a pressure roller and a pressure plate of the pressurizing device of FIG. 1. FIG. 3 is a perspective view schematically showing the form of a pressure plate of the pressurizing device of FIG. 1. FIG. 4 is a schematic structural diagram showing a pressurizing device according to Embodiment 2 of the present disclosure. FIG. 5 is a view showing a coupling form of a pressure roller and a pressure plate of the pressurizing device of FIG. 4.

The pressurizing device according to the present disclosure may be provided to pressurize a secondary battery cell including an exterior material 20 surrounding an electrode assembly 10. The pressurizing device according to the present disclosure may include pressure plates 31, 32 and pressure rollers 41, 42.

The pressure rollers 41, 42 may be provided to roll on a portion of the exterior material overlapping the electrode assembly 10 and pressurize the electrode assembly 10. The pressure rollers 41, 42 may roll along the exterior material and move in one direction. The pressure plates 31, 32 may be provided to pressurize a portion of the exterior material overlapping edge areas of the electrode assembly 10. The pressure plates 31, 32 may have a form that extends along edge portions of the electrode assembly 10. The pressure plates 31, 32 may be disposed along the edges of the electrode assembly 10.

Both the pressure rollers 41, 42 and the pressure plates 31, 32 may be configured to physically pressurize the electrode assembly 10 in the thickness direction to remove air between the stacked electrodes and improve the impregnation property of the electrolyte. In other words, the pressure rollers 41, 42 and the pressure plates 31, 32 may pressurize the electrode assembly 10 to accelerate the permeation of the electrolyte into the electrodes.

The pressure plates 31, 32 may have a shape extending in one direction along the edges of the electrode assembly 10 to pressurize a portion of the exterior material 20 that overlaps the edge portions of the electrode assembly 10. The electrode assembly 10 has an overall rectangular shape, and a short side where an electrode tab 11 is formed and a long side adjacent to the short side may be provided at the edges of the electrode assembly 10.

The short side of the electrode assembly 10 may refer to both edges spaced apart in the length direction of the electrode assembly 10, that is, both ends of the electrode assembly 10 in the length direction. The long side of the electrode assembly 10 may refer to both edges spaced apart in the width direction of the electrode assembly 10, that is, both ends of the electrode assembly 10 in the width direction. The long side and the short side of the electrode assembly 10 only refer to both end edges in the width and length directions, and the length of each edge is not limited. For example, the length of the short side of the electrode assembly may be formed longer than the length of the long side.

The pressure plates 31, 32 may have a shape extending along the long side or the short side of the electrode assembly 10, and may be provided on the long side, the short side, or both of them of the electrode assembly 10. The pressure plate formed along the long side of the electrode assembly 10 may be referred to as a first plate 31, and the pressure plate formed along the short side of the electrode assembly 10 may be referred to as a second plate 32. The pressure plate may include the first plate 31 and/or the second plate 32.

The pressure rollers 41, 42 roll along a portion of the exterior material 20 that overlaps the electrode assembly 10 and pressurizes the electrode assembly 10, wherein the pressure rollers 41, 42 may be coupled to the pressure plates 31, 32. The pressure rollers 41, 42 may have a shape extending between the pressure plates spaced apart from each other. The movement of the pressure rollers 41, 42 may be guided by the pressure plates 31, 32. The pressure roller 41 may include a first roller 41 coupled to the first plate 31 and/or a second roller 42 coupled to the second plate 32.

In the following embodiments, the pressurizing device according to different arrangements of the pressure plate and the pressure roller, and more detailed structures and shapes of the pressure plates 31, 32 and the pressure rollers 41, 42 according to the same will be described.

### Embodiment 1

Referring to FIGS. 1 to 3, a pressurizing device according to Embodiment 1 of the present disclosure may include first plates 31 and a first roller 41.

The first plates 31 may be provided to pressurize both ends of the electrode assembly 10 in the width direction. The first plates 31 may pressurize the electrode assembly 10 in the thickness direction against portions of an exterior material overlapping both ends of the electrode assembly 10 in the width direction.

The first plates 31 may extend along the length direction of the electrode assembly 10. The first plates 31 may be provided in plurality. For example, the first plates 31 may be provided in a pair. In this case, a pair of the first plates 31 may be disposed to be spaced apart parallel to each other in the width direction of the electrode assembly 10. The first plates 31 may be disposed at both ends of the electrode assembly 10 in the width direction. In other words, the first plates 31 may be formed along the long side of the electrode assembly 10 described above.

The first plates 31 may pressurize both ends of the electrode assembly 10 in the width direction. The first plates 31 may pressurize both ends of the electrode assembly 10 in the width direction, that is, the long side, along the thickness direction of the electrode assembly 10. When both ends of the electrode assembly 10 in the width direction are pressurized, air remaining between the electrodes of the electrode assembly formed by stacking a plurality of electrodes may be removed by the pressure, and thus the electrode impregnation property of the electrolyte may be improved. The length of the first plate 31 may be formed longer than the length of the electrode assembly 10 to stably pressurize the long side of the electrode assembly 10.

A coupling hole 311 for coupling to the first roller 41 may be formed in the first plate 31 (see FIG. 3). The coupling hole 311 may be provided in a form that penetrates the first plate 31, and may have a form extending along the length direction of the first plate 31 to have a slit shape. A coupling portion 412 of the first roller 41 to be described later may be coupled to the first plate 31.

The first roller 41 may be provided to roll and pressurize the electrode assembly 10. The first roller 41 may roll on a portion of the exterior material 20 that overlaps the electrode assembly 10 and move. The first roller 41 may roll along the length direction of the electrode assembly 10 and move. The first roller 41 may pressurize a central portion of the electrode assembly 10 other than edge portions of the electrode assembly 10 that are pressurized by the first plates 31.

The first roller 41 may be coupled to the first plates 31. The movement of the first roller 41 may be guided by the first plates 31. The first roller 41 may be disposed between the pair of first plates 31 that are spaced apart parallel to each other. The first roller 41 may have a shape extending along the width direction of the electrode assembly 10 between the pair of first plates 31.

The first roller 41 may include a roller body 411 and coupling portions 412. The roller body 411 may be provided to roll to pressurize a portion of the exterior material 20 that overlaps the electrode assembly 10. The roller body 411 may have an overall cylindrical appearance that extends along the width direction of the electrode assembly 10. The length of the roller body 411 may be formed corresponding to the distance between the pair of first plates 31. The roller body 411 may roll along the length direction of the electrode assembly 10.

The coupling portion 412 may extend from the roller body 411. The coupling portion 412 may be provided to be coupled to the first plate 31 and supported by the first plate 31. The coupling portion 412 is formed in a cylindrical shape, and the diameter of the coupling portion 412 may be smaller than the diameter of the roller body 411. The diameter of the coupling portion 412 may correspond to, for example, the width of the coupling hole 311 formed in the first plate 31. The coupling portion 412 may be inserted into and coupled to the coupling hole 311 of the first plate 31. The coupling portion 412 may be supported by contacting the inner circumferential surface of the coupling hole 311 of the first plate 31. The coupling portion 412 may be slidable along the coupling hole 311.

By adopting the configuration of the first plates 31 pressurizing the edge ends of the electrode assembly 10 and the first roller 41 pressurizing the central portion of the electrode assembly 10 between the first plates 31, the entire area of the electrode assembly 10 may be evenly pressurized, and the electrolyte impregnation rate of the electrode may be greatly improved.

The first plates 31 and the first roller 41 may be provided on the opposite side of the exterior material 20 with the electrode assembly 10 interposed therebetween.

### Embodiment 2

Embodiment 2 of the present disclosure may differ from Embodiment 1 in that second plates 32 and a second roller 42 are provided. Except for the difference, it should be noted that the contents of the pressurizing device according to Embodiment 1 of the present disclosure described above may be commonly applied to Embodiment 2, and therefore, the contents common to Embodiment 1 will be omitted as much as possible, and Embodiment 2 will be described focusing on the differences from Embodiment 1.

Referring to FIGS. 4 and 5, a pressurizing device according to Embodiment 2 of the present disclosure may include the second plates 32 and the second roller 42.

The second plates 32 may be provided to pressurize both ends of the electrode assembly 10 in the length direction. The second plates 32 may extend in the width direction of the electrode assembly 10, and may be provided in a pair and disposed at both ends of the electrode assembly 10 in the length direction. In other words, the second plates 32 may be formed along the short side of the electrode assembly 10. The length of the second plate 32 may be formed longer than the width of the electrode assembly 10. A coupling hole 321 for coupling to the second roller 42 may be formed through the second plate 32 in the form of a slit.

The second roller 42 may be provided to roll and pressurize the electrode assembly 10. The second roller 42 may roll on a portion of the exterior material 20 that overlaps the electrode assembly 10 and move. The second roller 42 may be disposed between the pair of second plates 32 spaced apart in the length direction of the electrode assembly 10. The second roller 42 may be coupled to the second plates 32. The movement of the second roller 42 may be guided by the second plates 32.

The second roller 42 may include a roller body 421 that rolls on the surface of the exterior material 20 and pressurizes the electrode assembly 10, and coupling portions 422 that extends from the roller body 421 and is provided to be coupled to the second plates 32. The roller body 421 may have a cylindrical shape, and the coupling portions 422 may be provided in a form that protrudes from both ends of the roller body 421 in the length direction. The coupling portion 422 may be inserted into and supported by the coupling hole 321 of the second plate 32, and may be slidable along the coupling hole 321.

The second roller 42 may roll in a direction toward an exterior material opening 21 formed on one side of the exterior material 20. The exterior material opening 21 for discharging residual air, gas, and the like may be formed on one side of the exterior material 20. The second roller 42 rolls in a direction toward the exterior material opening 21 and pressurizes the electrode assembly 10, so that residual air or the like may be pressurized and moved in a direction toward the exterior material opening 21, and therefore the process of discharging gas through the exterior material opening 21 may be performed more easily.

### Embodiment 3

Embodiment 3 of the present disclosure may differ from the previous embodiments in that first plates 31, second plates 32, a first roller 41, and a second roller 42 are all provided. Likewise, the contents common to the previous embodiments will be omitted as much as possible, and Embodiment 3 will be described focusing on the differences from the previous embodiments.

A pressurizing device according to Embodiment 3 of the present disclosure may include the first plates 31, the second plates 32, the first roller 41, and the second roller 42.

The first plates 31 may extend along the length direction of the electrode assembly 10 to pressurize both ends of the electrode assembly 10 in the width direction. The second plates 32 may extend along the width direction of the electrode assembly 10 to pressurize both ends of the electrode assembly 10 in the length direction. In other words, the first plates 31 and the second plates 23 may be provided to pressurize the long side and the short side of the electrode assembly 10, respectively.

The first roller 41 may extend in the width direction of the electrode assembly 10 between the pair of first plates 31. The second roller 42 may extend in the length direction of the electrode assembly 10 between the pair of second plates 32. The first roller 41 and the second roller 42 may be coupled to the first plates 31 and the second plates 32, respectively.

The first roller 41 and the second roller 42 may be configured to sequentially pressurize the electrode assembly 10 according to a preset order. That is, the pressurization by the first roller 41 and the second roller 42 may not be performed simultaneously, but may be performed separately. For example, after the pressurization by the first roller 41 and the first plates 31, the process of pressurization by the second roller 42 and the second plates 32 may be performed. Conversely, after the pressurization by the second roller 42 and the second plates 32, the process of pressurization by the first roller 41 and the first plates 31 may be performed.

By adopting this configuration, a phenomenon in which the gas discharge path due to the pressurization by the roller is blocked by the pressure plate may be prevented. For example, the second roller 42 rolls in a direction toward the exterior material opening 21 and pressurizes the electrode assembly 10, so that a phenomenon in which the first plates 31 block the flow of gas in a direction toward the exterior material opening 21 may be prevented. Additionally, since another pressurizing process is sequentially performed after one pressurizing process, the removal of the air layer and the impregnation property of the electrolyte may be further improved by double pressurization.

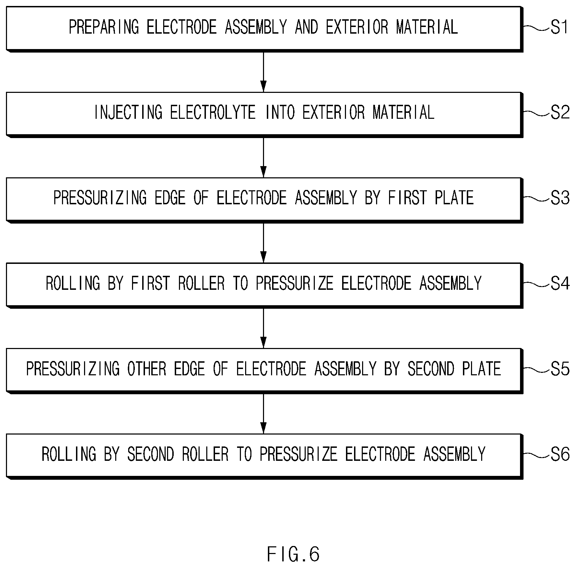

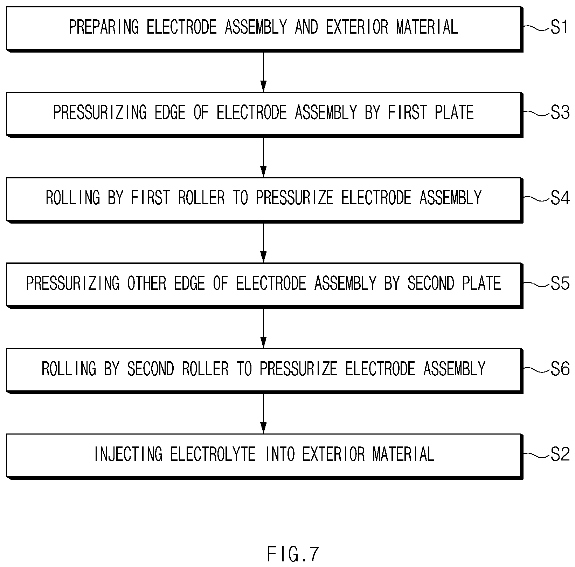

FIGS. 6 and 7 are flow charts showing a pressurizing method according to the present disclosure. FIG. 6 is a flow chart showing a pressurizing method according to the present disclosure in which an injection step is performed before a pressurizing step. FIG. 7 is a flow chart showing a pressurizing method according to the present disclosure in which an injection step is performed after a pressurizing step.

Referring to FIGS. 6 and 7, the pressurizing method according to the present disclosure may include a preparation step S1 of preparing a secondary battery cell in which an exterior material opening 21 is formed in an exterior material 20 where an electrode assembly 10 is accommodated, an injection step S2 of injecting an electrolyte through the exterior material opening 21 so that the electrode assembly 10 is impregnated, a first plate pressurizing step S3 in which the first plate 31 pressurizes a portion of the exterior material 20 overlapping one of an edge of the electrode assembly 10 in the length direction or an edge of the electrode assembly 10 in the width direction, and a first roller pressurizing step S4 in which a first roller 41 extending perpendicular to the first plate 31 rolls on a portion of the exterior material 20 overlapping the electrode assembly 10 and pressurizes the electrode assembly 10.

The first plate pressurizing step S3 and the first roller pressurizing step S4 (hereinafter, the first pressurizing step) in which pressurization by the first plates 31 and the first roller 41 is performed respectively, may be performed before or after the injection step S2 in which the electrolyte is injected.

The pressurizing method according to the present disclosure may further include a second plate pressurizing step S5 in which the second plate 32 pressurizes a portion of the exterior material 20 overlapping the other of an edge of the electrode assembly 10 in the length direction or an edge of the electrode assembly 10 in the width direction, and a second roller pressurizing step S6 in which a second roller 42 extending perpendicular to the second plate 32 rolls on a portion of the exterior material 20 overlapping the electrode assembly 10 and pressurizes the electrode assembly 10.

The second plate pressurizing step S5 and the second roller pressurizing step S6 (hereinafter, the second pressurizing step) in which pressurization by the second plates 32 and the second roller 42 is performed respectively, may be performed before or after the first pressurizing step S3, S4 described above, and likewise, may be performed before or after the injection step S2 in which the electrolyte is injected.

For example, the second pressurizing step S5, S6 may be performed after the first pressurizing step S3, S4, and then the injection step S2 of injecting the electrolyte may be performed (see FIG. 7). Alternatively, the first pressurizing step S3, S4 may be performed after the injection step S2 of injecting the electrolyte, and then the second pressurizing step S5, S6 may be performed sequentially (see FIG. 6). Alternatively, various variations may be possible, such as the injection step S2 of injecting the electrolyte may be performed after the first pressurizing step S3, S4, and then the second pressurizing step S5, S6 may be performed. The first pressurizing step and the second pressurizing step may be performed repeatedly in a plurality of times as necessary.

The present disclosure has been hereinabove described with regard to a limited number of embodiments and drawings, but the above description is merely an illustrative description of the technical ideas of the present disclosure, and various modifications and variations will be possible by those having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments. The scope of protection of the present disclosure should be interpreted in accordance with the claims below, and all technical ideas within the scope equivalent thereto should be construed as being included in the scope of the present disclosure.

## Claims

1. A pressurizing device provided to pressurize a secondary battery cell comprising an electrode assembly and an exterior material surrounding the electrode assembly, the pressurizing device comprising:
a pressure roller that rolls on a portion of the exterior material overlapping the electrode assembly and pressurizes the electrode assembly; and
pressure plates that extend in one direction along edges of the electrode assembly to pressurize portions of the exterior material overlapping edge portions of the electrode assembly.

2. The pressurizing device according to claim 1,
wherein the pressure roller is coupled to the pressure plates, and
wherein the pressure plates guide movement of the pressure roller.

3. The pressurizing device according to claim 1,
wherein a pair of the pressure plates are disposed to be spaced apart parallel to each other.

4. The pressurizing device according to claim 1,
wherein the pressure roller comprises:
a roller body rolling against the exterior material and provided to pressurize the electrode assembly; and
coupling portions extending from the roller body to be coupled to and supported by the pressure plates.

5. The pressurizing device according to claim 4,
wherein a coupling hole is formed in the pressure plate so that the coupling portion of the pressure roller is coupled.

6. The pressurizing device according to claim 1,
wherein the pressure plate comprises first plates extending along the length direction of the electrode assembly to pressurize both ends of the electrode assembly in a width direction.

7. The pressurizing device according to claim 6,
wherein a pair of the first plates are disposed to be spaced apart parallel to each other in the width direction of the electrode assembly, and
the pressure roller comprises a first roller extending in the width direction of the electrode assembly between the pair of first plates.

8. The pressurizing device according to claim 1,
wherein the pressure plate comprises second plates extending along the width direction of the electrode assembly to pressurize both ends of the electrode assembly in the length direction.

9. The pressurizing device according to claim 8,
wherein a pair of the second plates are disposed to be spaced apart parallel to each other in the length direction of the electrode assembly, and
the pressure roller comprises a second roller extending in the length direction of the electrode assembly between the pair of second plates.

10. The pressurizing device according to claim 1,
wherein the length of the pressure plates is formed longer than the length of edges of the electrode assembly on which the pressure plates are disposed.

11. The pressurizing device according to claim 1,
wherein the pressure roller rolls in a direction toward an exterior material opening formed on one side of the exterior material.

12. The pressurizing device according to claim 1,
wherein the pressure plate comprises:
the first plates extending along the length direction of the electrode assembly to pressurize both ends of the electrode assembly in the width direction; and
the second plates extending along the width direction of the electrode assembly to pressurize both ends of the electrode assembly in the length direction, and
the pressure roller comprises:
a first roller extending in a width direction of the electrode assembly between the pair of first plates; and
a second roller extending in a length direction of the electrode assembly between the pair of second plates,
wherein the first roller and the second roller are configured to sequentially pressurize the electrode assembly according to a preset order.

13. A pressurizing method, comprising:
a preparation step of preparing a secondary battery cell in which an exterior material opening is formed in an exterior material where an electrode assembly is accommodated;
an injection step of injecting an electrolyte through the exterior material opening so that the electrode assembly is impregnated in the electrolyte;
a first plate pressurizing step in which the first plate pressurizes a portion of the exterior material overlapping one of an edge of the electrode assembly in the length direction or an edge of the electrode assembly in the width direction; and
a first roller pressurizing step in which a first roller extending perpendicular to the first plate rolls on a portion of the exterior material overlapping the electrode assembly and pressurizes the electrode assembly.

14. The pressurizing method according to claim 13, further comprising:
a second plate pressurizing step in which the second plate pressurizes a portion of the exterior material overlapping the other of an edge of the electrode assembly in the length direction or an edge of the electrode assembly in the width direction; and
a second roller pressurizing step in which a second roller extending perpendicular to the second plate rolls on a portion of the exterior material overlapping the electrode assembly and pressurizes the electrode assembly.

15. The pressurizing method according to claim 13,
wherein the first plate pressurizing step and the first roller pressurizing step are performed before and/or after the injection step.
